(19) Europäisches Patentamt
European Patent Office
Office européen des brevets

(11) Publication number: 0 449 074 A2

(12) # EUROPEAN PATENT APPLICATION

(21) Application number: **91104151.5**

(22) Date of filing: **18.03.91**

(51) Int. Cl.5: **C08J 5/08**, C08L 81/00, B29C 67/14, B29C 43/00

(30) Priority: **19.03.90 US 495173**

(43) Date of publication of application: **02.10.91 Bulletin 91/40**

(84) Designated Contracting States: **AT BE CH DE ES FR GB IT LI NL**

(71) Applicant: **PHILLIPS PETROLEUM COMPANY**
**5th and Keeler**
**Bartlesville Oklahoma 74004(US)**

(72) Inventor: **Soules, David Andrew**
**1207 May Lane**
**Bartlesville, OK 74006(US)**
Inventor: **Wright, Roy Franklin**
**2076 Southview**
**Bartlesville, OK 74006(US)**

(74) Representative: **Geissler, Bernhard, Dr.jur., Dipl.-Phys. et al**
**Patent- u. Rechtsanwälte Bardehle**
**-Pagenberg-Dost-Altenburg**
**-Frohwitter-Geissler & Partner Postfach 86 06 20 Galileiplatz 1**
**W-8000 München 80(DE)**

(54) **Poly(arylene sulfide) resins reinforced with glass fibres.**

(57) Continuous, woven and non-woven glass fibers are impregnated with certain silanes before use of the fibers to make reinforced thermoplastic composites using pultrusion or compression molding. Continuous, woven and non-woven glass fiber reinforced composites are also made by concurrently combining the fibers with certain silanes and a thermoplastic matrix material using pultrusion or compression molding.

EP 0 449 074 A2

## Background of the Invention

The present invention relates to fiber reinforced thermoplastic materials.

The production of thermoplastic material of poly(arylene sulfide) resins reinforced with unidirectional glass fibers by pultrusion has been disclosed. See, for example, U.S. Patent 4,680,224. At least one fiber strand of continuous filaments is contacted with a poly(arylene sulfide) resin in the form of a powder or a slurry. The impregnated strand or strands are then pulled through a temperature controlled die for producing a composite which can have the form of, for example, a tape, a rod or a sheet.

The glass fiber reinforced pre-preg tapes produced in this manner are useful for such applications as structural members, aircraft parts, doctor blades, and the like.

Epoxysilanes have been used in glass reinforced poly(phenylene sulfide) compositions but have not been used for continuous unidirectional fiber reinforced poly(phenylene sulfide) and do not address the object of improving transverse tensile properties in prepreg tapes.

For some applications the continuous fiber reinforced thermoplastic prepreg tape will be more useful with improved transverse tensile strength, improved fiber/resin adhesion and resistance to stress induced microcracking. Structural members made with fiber reinforced thermoplastic composites which are subjected to multi-directional high loads require materials of construction with, among other properties, good transverse tensile strength.

It is known in the art to produce materials of woven glass fibers impregnated with poly(arylene sulfide) resins by means of lamination processes. These materials have been used for such applications as structural members and aircraft parts. These materials can also benefit from improved hydrolytic stability and/or from improved transverse tensile strength for better interply strength and from reduced stress induced microcracks.

## Summary of the Invention

It is an object of this invention to provide methods for impregnating continuous, woven and non-woven glass fibers with a silane or silanes to have fibers for use in fiber reinforced thermoplastics. Another object is to provide these silane impregnated fibers for use in fiber reinforced thermoplastic.

It is an object of this invention to provide a method for producing continuous fiber reinforced thermoplastic material in which the fibers are treated with silane prior to impregnation with a thermoplastic matrix material. It is also an object of this invention to provide a method for producing continuous fiber reinforced thermoplastic material in which the fibers are treated concurrently with the silane and a thermoplastic matrix material.

It is also an object of this invention to provide a method or methods for producing fiber reinforced thermoplastic prepreg tapes with improved transverse tensile strength. It is another object of this invention to provide a fiber reinforced thermoplastic material having improved transverse tensile strength properties.

It is still another object of this invention to provide an impregnated woven glass fabric composite with improved shear strength and a non-woven glass fabric composite with improved fiber/resin adhesion and a method for making these impregnated glass fabric composites.

In accordance with one embodiment of the present invention, glass fiber reinforced poly(arylene sulfide) prepreg tapes are prepared by contacting continuous glass filament with a mixture of poly(arylene sulfide) and epoxysilane, then fusing the poly(arylene sulfide) to form the composite.

In accordance with another embodiment of this invention, a woven glass fabric is impregnated with a poly(arylene sulfide) and silane composition.

In accordance with yet another embodiment of this invention, a non-woven glass fabric is impregnated with a poly(arylene sulfide) and silane composition.

## Detailed Description

The composites produced in accordance with this invention have improved adhesion of the resin to the glass as measured by transverse tensile strength and/or improved hydrolytic stability. Such material having good transverse tensile strength also exhibit reduced levels of microcracking.

Examples of poly(arylene sulfide) resins contemplated as useful in making the compositions of this invention include those described in U.S Patent No. 3,354,129 issued to Edmonds and Hill on November 21, 1967, and those described in U.S. Patent No. 3,919,177, issued to Campbell on November 11, 1977, the disclosures of which are hereby incorporated by reference. The presently preferred polymer is poly(phenylene sulfide).

The term poly(arylene sulfide) includes homopolymers and the normally solid arylene sulfide copolymers, terpolymers and the like having melting or softening points of at least about 150° C, and more preferably from about 200° C to about 400° C. Other examples of poly(arylene sulfide) materials are poly-(4,4-biphenylene sulfide), poly(2,4-tolylene sulfide), and a copolymer from p-dichlorobenzene, 2,4-dichlorotoluene and sodium sulfide and the like.

The term poly(phenylene sulfide) includes homopolymers and copolymers containing ortho-, meta- and/or para-phenylene linkages on aryl groups in the polymer chain. Also included are aryl-substituted derivatives of these materials. Also included are poly(arylene sulfide sulfone), poly(arylene sulfide ketone) and poly(arylene sulfide diketone).

The epoxysilanes contemplated as useful in making the compositions of this invention include epoxysilanes within the formula:

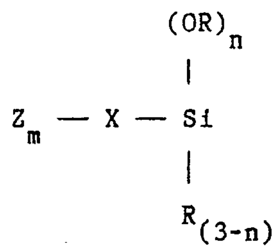

wherein

Z is

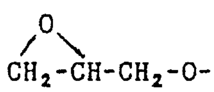 or 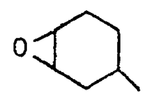

X is a linear or branched alkylene, arylene or arylalkylene hydrocarbon radical having from 1 to about 15 carbon atoms,

R is a hydrocarbon radical having from 1 to about 8 carbon atoms,

m is an integer of at least 1, and

n is an integer of 1 to 3.

One of the Rs in the above formula may also be a chlorine atom. Generally, the two different R groups will not be the same. Presently preferred are epoxysilanes within the formula above wherein n is equal to 3.

When Z is

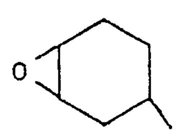 ,

improved hydrolytic stability is observed.

Examples of particularly suitable epoxysilanes are 3-glycidoxypropyltrimethoxysilane,
[2-(3,4-Epoxy-4-methylcyclohexyl)propyl]-methyldiethoxysilane
beta-(3,4-epoxycyclohexyl)-ethyltrimethoxysilane,
3-glycidoxypropylmethyldiethoxysilane, 2-glycidoxypropyltrimethoxysilane and mixtures of the foregoing expoxysilanes. The most preferred epoxysilanes are 3-glycidoxypropyltrimethoxysilane which is commercially available from the Union Carbide Corporation under the trade designation UCARSIL™ TC-100 organosilicon chemical, and beta-(3,4-epoxycyclohexyl)-ethyltrimethoxysilane which is available from the Union Carbide Corporation under the trade designation A-186.

## Fiber Reinforced Pultruded Thermoplastics

The improved glass reinforced thermoplastic polymer produced by the method of the present invention has a number of characteristics which represent an improvement over the prior art, including improved tensile properties in the material transverse to the direction of fiber orientation. Also microcracking is substantially eliminated.

The fiber reinforced pultruded thermoplastic embodiments of the invention are basically comprised of poly(arylene sulfide) resin, glass reinforcing material, and at least one epoxysilane.

The presently preferred composition of matter comprises substantially linear poly(phenylene sulfide) having a melt flow within the range of about 1 to about 800 grams per 10 minutes, unidirectionally aligned continuous glass fiber reinforcements, a silane content of from about 0.05 to about 5 weight percent based on weight of the glass or, more preferably, from about 0.25 to about 1.0 weight percent based on weight of the glass, and improved transverse tensile strength.

The scope of this invention, however, encompasses a much broader range and requires only that an amount of silane sufficient to increase the transverse tensile strength, improve adhesion of the resin to the fiber, or to improve the hydrolytic stability of the resulting composition be used.

The poly(arylene sulfide) resin is present in the pultruded composite in an amount in the range of from about 20% to about 90% by weight of the composition, preferably in the range of from about 25% to about 60% by weight, and most preferably in the range of from about 25% to about 35% by weight.

The glass reinforcing material is present in the pultruded composite in an amount in the range of from about 80% to about 10% by weight of the total composition, preferably from about 40% to about 75% by weight, and most preferably from about 65% to about 75% by weight.

Continuous unidirectionally aligned glass fibers arranged in single end rovings are contemplated as a suitable reinforcement material. The glass fibers are available commercially. Examples include Certainteed 70C sized E glass and Certainteed 70D-11, with the latter being presently preferred. However, fiber contemplated as useful in this invention is not limited to single end roving, but may also be a conventional or assembled roving. Also, these examples are not to be construed as constraints on the diameter of fiber contemplated as useful in this invention.

A method for producing the unidirectional fiber reinforced thermoplastic material of this invention comprises any or all of the following steps:

(1) treating the continuous glass fiber with the chosen silane or silanes; thereafter

(2) passing the glass fibers through a spray, slurry or other means of impregnation with the thermoplastic matrix material;

(3) passing the treated and impregnated glass fibers through an oven;

(4) giving the composite final shaping in a heated die.

Another method for producing the unidirectional fiber reinforced thermoplastic material of this invention comprises any or all of the following steps:

(1) preparing a slurry or emulsion comprising a thermoplastic resin, one or more of the chosen silanes and optionally other additives as needed;

(2) passing the continuous glass fibers through the slurry of step (1);

(3) passing the treated and impregnated glass fibers through an oven;

(4) giving the composite final shaping in a heated die.

In each of these two methods, the impregnation of the fibers with the thermoplastic material is carried out at room temperature. The treated and impregnated fibers are exposed to heat sufficient to dry them before passing into the hot die where they are heated to at least the melting point of the poly(arylene sulfide). The line speed, and thus time at each temperature, will vary according to such factors as the polymer used and the dimensions of the pultrusion product.

## Woven Glass Fabric Reinforced Thermoplastics

Another embodiment of the present invention provides methods for: (a) producing the improved silane impregnated woven fabric for making the woven glass reinforced thermoplastics of this invention; (b) making the woven glass reinforced thermoplastics using the glass from (a); and (c) making woven glass reinforced thermoplastics by use of an emulsion which contains resin and one or more epoxysilane.

One method for making the woven glass reinforced thermoplastic composite of this invention comprises any or all of the following steps as required: (1) burning off of any organic material on the woven glass fabric; (2) impregnating the woven glass fabric with one or more of the chosen silanes by any known method such as dipping or spraying, with or without solvent or slurry liquid; and (3) compression molding the treated glass fabric with the chosen thermoplastic to produce a laminate.

Additionally, the chosen epoxysilane or silanes may be first combined with the chosen thermoplastic

prior to the combination of the thermoplastic with the woven glass fabric in a compression molding or lamination process.

Also, the thermoplastic, woven glass fabric and silane may be combined using pultrusion techniques involving, for example, application of a mixture of the thermoplastic and the epoxysilane to the woven glass fabric. Alternatively, the glass fabric can first be combined with the epoxysilane, then pultruded to apply the thermoplastic.

The epoxysilanes described above are suitable for use in making the impregnated woven glass fabric of this invention. The woven glass fabric contemplated as useful in this invention is any used or available for applications such as plain weave or satin weave fiberglass fabrics.

The poly(arylene sulfide) resins described above are suitable for use in making the slurries, emulsions or mixtures for making the woven glass fabric reinforced thermoplastic composites.

The woven glass fiber reinforced thermoplastic composites of this invention are: from about 20 weight percent to about 60 weight percent poly(arylene sulfide) resin, preferably from about 30 weight percent to about 50 weight percent poly(arylene sulfide) resin, and most preferably from about 35 weight to about 45 weight percent poly(arylene sulfide) resin; from about 40 weight percent to about 80 weight percent glass fiber, preferably from about 50 weight percent to about 70 weight percent glass fiber, and most preferably from about 55 weight percent to about 65 weight percent glass fiber; and from about 0.05 weight percent to about 5 weight percent silane, more preferably from about .25 weight percent to about 1 weight percent silane, and most preferably from about .25 to about 0.5 weight percent silane based upon weight of the glass.

Non-Woven Glass Fabric Reinforced Thermoplastic

Non-woven glass fabric may also be used for producing glass fiber reinforced thermoplastic composites in accordance with this invention. The non-woven glass fabric may be used in compression molding or lamination to form glass fiber reinforced thermoplastic composites. The glass fiber may be impregnated with one or more chosen silanes before compression molding or lamination of the glass fiber to form the composite. Alternatively, one or more of the chosen epoxysilanes may be combined with the thermoplastic resin prior to use of the silane/resin mixture in forming non-woven glass fiber reinforced thermoplastic composites.

Non-woven glass fabric reinforced thermoplastic composites can have ratios of thermoplastic to glass fiber and weight percentages of thermoplastic, silane and glass fiber the same as those for woven glass fabric reinforced thermoplastics as described above.

Example I

This Example demonstrates the preparation and properties of unidirectional continuous glass fiber reinforced poly(phenylene sulfide). Compound 4 listed in Table 1, below, is an older, commercial grade of unidirectional continuous glass fiber reinforced poly(phenylene sulfide) made from an assembled glass roving, made without the added silanes of the present invention and made from a poly(phenylene sulfide) whose properties and preparation differ somewhat from those of the poly(phenylene sulfide) used in this invention. It is included in this Example to represent the "state of the art" at the time the work of the current invention was done.

With the exception of Compound 4 discussed above, all Compounds listed in the Tables below were made using techniques disclosed in U.S. Patent No. 4,680,224, the disclosure of which is hereby incorporated by reference, modified to include a curtain sprayer in the slurry bath and rolling redirect bars at any point the glass is wet. Likewise, all except Compound 4 were made using Certainteed 70-C sized E glass of either 20 micron diameter, 250 yield or 14 micron diameter, 450 yield. Finally, all except Compound 4 were made using 0.5 weight percent (for Table 1) or the indicated level of the indicated silane in the slurry bath (based on the weight of water in the slurry bath) and using a poly(phenylene sulfide) with a melt flow of approximately 50-150 g/10 min. (ASTM D1238-79, Procedure B, Condition 315/5.0, modified to use a 5 minute preheat time rather than the 6 minute minimum stated in the test method). Techniques disclosed in U.S. Patent No. 3,919,177; U.S. No. Patent 4,801,664 and/or U.S. Patent No. 4,415,729 were used for preparation of the poly(phenylene sulfide)s for the test. Again, so that comparisons would be valid, only one lot (same flow rate and preparation method) of poly(arylene sulfide) was used within any test comparison listed below.

The unidirectional prepreg tape composite prepared as detailed above was converted into test specimens by compression molding into laminates using heated platen presses. For transverse tensile

testing, the laminates were 10 inch by 10 inch unidirectional plates cut into the proper ASTM test specimens using a water cooled saw with a diamond blade. Molding conditions included 10 minutes contact at 625° F, opening and closing the press to release pressure at 40, 80 and 120 psi, 20 minutes at 150 psi and 2 hours at 400° F at no applied pressure.

The data in Table 1, below, show the effect on transverse tensile strength of the resulting composite of the use of different silanes in the slurry bath during preparation of the composite. The data also show that even when no silane is used in the slurry bath, other factors, such as the glass fiber type, contribute enhanced properties to a composite (Composite 1) which is superior in transverse tensile strength to the commercial product listed (Composite 4).

The most striking effect discernible from the data in Table 1, however, is the markedly superior transverse tensile strength of the products made using epoxy silanes in the slurry bath during composite preparation. As the data in Table 1 show, the products made using TC-100 silane exhibit transverse tensile strengths that are almost three times that of the product made using no silane and about six times that of the older, commercial grade of unidirectional glass fiber reinforced polyphenylene sulfide.

Table 1

Effect of Silane on Transverse Tensile Strength in a Flashed, Air-Cured Resin

| Compound | Silane | Transverse Tensile Strength, ksi |
|---|---|---|
| 1 | None | 3.4 |
| 2 | A-186[a] | 7.0 |
| 3 | TC-100[b] | 9.1 |
| 4 (Commercial Product) | | 1.5 |

[a] Beta-(3,4-epoxycyclohexyl)-ethyltrimethoxysilane, commercially available from Union Carbide.

[b] 3-glycidoxypropyltrimethoxysilane, commercially available from Union Carbide.

While this invention has been described in detail for the purpose of illustration, it is not to be construed as limited thereby. This patent is intended to cover all changes and modifications within the spirit and scope thereof.

## Claims

1. A composition comprising
   a) poly(arylene sulfide)
   b) at least one epoxysilane having the formula:

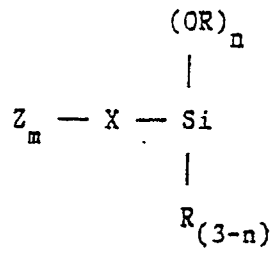

wherein

Z is

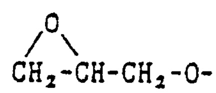 or 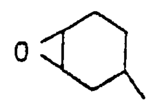

X is a linear or branched alkylene, arylene or arylalkylene hydrocarbon radical having from 1 to about 15 carbon atoms,

R is a hydrocarbon radical having from 1 to about 8 carbon atoms,

m is an integer of at least 1, and

n is an integer of 1 to 3; and

c) continuous glass filaments.

**2.** A composition according to claim 1, wherein (b) is a plurality of silanes within said formula.

**3.** A composition according to claim 1, wherein the amount of (a) ranges from about 20 to about 90 weight-% and the amount of (c) ranges from about 80 to about 10 weight-% based upon (a) plus (c) being 100 weight-% and wherein the amount of (b) ranges from about 0.05 to about 5 weight-% based on weight of (c).

**4.** A composition according to claim 1, wherein said poly(arylene sulfide) is selected from the group of poly(phenylene sulfide) and poly(phenylene sulfide sulfone).

**5.** A method cf preparing a continuous glass fiber reinforced thermoplastic composite comprising:

a) passing continuous glass fibers through a slurry bath containing a mixture of poly(arylene sulfide) and at least one epoxysilane, to impregnate said glass fibers; and

b) heating and shaping said impregnated glass fibers.

**6.** A method of preparing a continuous glass fiber reinforced thermoplastic composite comprising:

a) impregnating continuous glass fibers with at least one epoxysilane,

b) thereafter impregnating said continuous glass fibers with poly(arylene sulfide);

c) heating and shaping said impregnated continuous glass fibers.

**7.** A method of making a glass fiber reinforced thermoplastic composite comprising:

a) impregnating a woven or non-woven glass fabric with at least one epoxysilane.

b) thereafter compression molding one or more of said woven or non-woven glass fabrics with poly-(arylene sulfide).

**8.** A method of making a glass fiber reinforced thermoplastic composite comprising compression molding one or more layers of a woven or non-woven glass fiber fabric with a mixture of poly(arylene sulfide) and at least one epoxysilane.

**9.** A method according to claim 8, wherein from about 20 to about 60 weight-% of poly(arylene sulfide) and from about 40 weight-% to about 80 weight-% glass based on the mixture being 100% and further from about 0.05 to about 5 weight-% of said silane based on the weight of said glass are used.

**10.** A method according to claim 7 or 8, wherein organics are burned off from said woven or non-woven glass fabric before said woven or non-woven glass fabric is impregnated with said at least one silane.

**11.** A method as in claims 5 to 10, wherein said silane is within the formula:

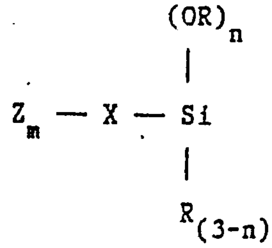

wherein
Z is

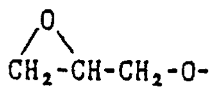 or 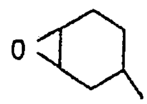

X is a linear or branched alkylene, arylene or arylalkylene hydrocarbon radical having from 1 to about 15 carbon atoms,
R is a hydrocarbon radical having from 1 to about 8 carbon atoms,
m is an integer of at least 1, and
n is an integer of 1 to 3.

**12.** A method according to claims 5 to 11, wherein said poly(arylene sulfide) is selected from the group of poly(phenylene sulfide) and poly(phenylene sulfide sulfone).

**13.** A glass fiber reinforced composite comprising:
a) poly(arylene sulfide)
b) at least one silane within the formula:

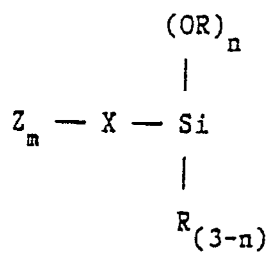

wherein
Z is

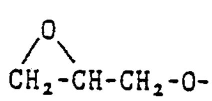 or 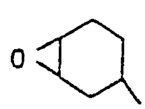

X is a linear or branched alkylene, arylene or arylalkylene hydrocarbon radical having from 1 to

about 15 carbon atoms,
R is a hydrocarbon radical having from 1 to about 8 carbon atoms,
m is an integer of at least 1, and
n is an integer of 1 to 3; and
c) a woven or a non-woven glass fabric.

**14.** A composite according to claim 13, wherein said poly(arylene sulfide) is selected from the group of poly(phenylene sulfide) and poly(phenylene sulfide sulfone).

**15.** A composite according to claim 14, wherein (b) is a plurality of silanes within said formula.

**16.** A composite according to claim 15, wherein said composite is from about 20 weight-% to about 60 weight-% of said poly(arylene sulfide) and from about 80 weight-% to about 40 weight-% of glass fiber based on these two components being 100 weight-%; and wherein there is from about 0.05 weight-% to about 5 weight-% of said silane based on weight of said glass fiber.